# EUROPÄISCHE PATENTSCHRIFT

(11) **EP 2 193 257 B1**
(45) Veröffentlichungstag und Bekanntmachung des Hinweises auf die Patenterteilung: **13.11.2013**
(21) Anmeldenummer: 08801967.4
(22) Anmeldetag: 10.09.2008
(51) Int. Cl.: F01D 17/14, F02C 6/12

(54) **ABGASTURBOLADER FÜR EINE BRENNKRAFTMASCHINE**
EXHAUST-GAS TURBOCHARGER FOR AN INTERNAL COMBUSTION ENGINE
TURBOCOMPRESSEUR POUR UN MOTEUR À COMBUSTION INTERNE

(30) Priorität: 28.09.2007 DE 102007046458
(43) Veröffentlichungstag der Anmeldung: 09.06.2010
(73) Patentinhaber: Daimler AG, 70327 Stuttgart (DE)
(72) Erfinder: FLEDERSBACHER, Peter, 70569 Stuttgart (DE); HIRTH, Torsten, 71277 Rutesheim (DE)
(74) Vertreter: JENSEN & SON
(86) Internationale Anmeldenummer: PCT/EP2008/007395
(87) Internationale Veröffentlichungsnummer: WO 2009/043430

(56) Entgegenhaltungen:
- WO-A-2007/031752

## Beschreibung

Die Erfindung betrifft einen Abgasturbolader für eine Brennkraftmaschine gemäß dem Oberbegriff des Anspruchs 1.

Aus der Offenlegungsschrift DE 10 2005 027 080 A1 geht ein Abgasturbolader für eine Brennkraftmaschine hervor, dessen Abgasführungsabschnitt eine Leitvorrichtung zur Änderung der Beaufschlagung eines Turbinenrades des Abgasturboladers durch das Abgas aufweist, wobei die Leitvorrichtung einen durchströmbaren Leitgitterring und einen Axialschieber umfasst. Der Leitgitterring ist gehäusefest im Abgasführungsabschnitt in einem Wellenabschnittsbereich des Turbinenrades gelagert und ist mit Hilfe einer Fixierungsvorrichtung zentrisch zu einer Drehachse des Turbinenrades fixiert.

Zur Änderung der Beaufschlagung des Turbinenrades durch das Abgas ist der Axialschieber, welcher mit dem Turbinenrad und dem Leitgitterring koaxial angeordnet ist, translatorisch verschiebbar, wobei der Axialschieber an seinem dem Leitgitterring zugewandt angeordneten Ende eine Matrize in Form einer ringförmigen Aussparung aufweist, welche den Leitgitterring an seinem dem Axialschieber zugewandt angeordneten Ende aufnehmbar ausgestaltet ist. Zur zuverlässigen Funktion des Abgasturboladers ist es dabei notwendig, einen Berührungsspalt zwischen der Matrize und dem Leitgitterring vorzusehen, so dass beim Verschieben des Axialschiebers ein Verkanten ausgeschlossen werden kann. Zur Sicherung des mit der Berührungsfreiheit einhergehenden Bewegungsspaltes zwischen der Matrize und dem Leitgitterring ergibt sich durch die Fixierung beziehungsweise die Lagerung des Leitgitterrings eine aufwendige Montage des Abgasturboladers.

Der Leitgitterring weist einen undurchströmbaren Träger und am Träger befestigte durchströmbare Leitschaufeln auf. Der Träger dient zum einen der Lagerung des Leitgitterrings, zum anderen dient er der Halterung der Leitschaufeln. Grundsätzlich stellt der Träger den stabileren Bereich des Leitgitterrings dar. Wird nun der Axialschieber, wie im Stand der Technik ausgeführt, ausgehend von einem dem Träger abgewandt angeordneten Ende der Leitschaufeln die Leitschaufeln aufnehmend über den Leitgitterring geführt, besteht grundsätzlich die Gefahr, dass selbst eine minimale Neigung der Leitschaufeln ein Verkanten zwischen dem Leitgitterring und dem Axialschieber herbeiführt. Das Verkanten führt unter Umständen von einem unsicheren Betrieb zum Totalausfall des Abgasturboladers. Einen Abgasturbolader gemäß des Oberbegriffs des unabhängigen Anspruchs 1 offenbart WO 2007/031752 A1.

Die Aufgabe der Erfindung ist es, einen montagefreundlicheren und betriebssicheren Abgasturbolader bereit zu stellen.

Diese Aufgabe wird erfindungsgemäß mit einem Abgasturbolader für eine Brennkraftmaschine mit den Merkmalen des Anspruchs 1 gelöst. Die Unteransprüche geben zweckmäßige Weiterbildungen an.

Der erfindungsgemäße Abgasturbolader weist einen Leitgitterring auf, welcher so positioniert ist, dass dessen Leitschaufeln ausgehend von einem Träger des Leitgitterrings vom Axialschieber aufnehmbar sind. Der Axialschieber ist nun ausgehend von dem Lagerbereich des Leitgitterrings, welcher den bewegungsunfähigen und damit grundsätzlich stabileren Bereich des Leitgitterrings darstellt, über den ungelagerten und damit grundsätzlich bewegungsfähigen, instabileren Bereich des Leitgitterrings führbar. Dadurch ist ein Verkanten, welches beispielsweise durch eine Neigung des bewegungsfähigen Bereichs des Leitgitterrings herbeigeführt werden kann, vermeidbar.

In einer Ausgestaltung ist der Träger zentrisch zur Drehachse auf der Konturhülse gelagert, wobei die Konturhülse idealerweise als Zentriervorrichtung ausgestaltet ist. Die Konturhülse ist in einem Auslassbereich des Abgasführungsabschnitts stromab des Turbinenrades unbewegbar gehäusefest und starr positioniert. Durch die Lagerung des Trägers auf der Konturhülse ist eine fixierte Lagerung des Leitgitterrings und somit ein fixierter und stabiler Berührungsspalt zwischen dem Leitgitterring und dem Axialschieber herbeiführbar.

In einer weiteren Ausgestaltung ist zur Zentrierung eine Zentriervorrichtung zwischen dem Leitgitterring und der Konturhülse angeordnet und/oder die Zentrierung ist mit Hilfe einer reib- und/oder formschlüssigen Verbindung herbeiführbar. Mit Hilfe der Zentriervorrichtung und/oder der entsprechenden Verbindung zwischen Konturhülse und Leitgitterring ist eine Bewegung des Leitgitterrings auf der Konturhülse vermeidbar.

In einer weiteren, kostengünstigen Ausgestaltung ist die Zentriervorrichtung starr ausgebildet, wobei beispielsweise ein Stift beziehungsweise ein Pin als Zentriervorrichtung dient.

In einer weiteren Ausgestaltung weist der Leitgitterring eine Vorspannvorrichtung auf, wobei mit Hilfe der Vorspannvorrichtung, neben der Zentrierung des Leitgitterrings, ein Strömungsverluste herbeiführender Spalt zwischen einem einer Gehäusewandung und einem dieser Gehäusewandung zugewandt angeordneten Ende der Leitschaufeln nahezu oder vollständig vermeidbar ist.

Idealerweise ist die Vorspannvorrichtung an einem der Konturhülse zugewandt angeordneten Ende des Trägers positioniert, wodurch eine einfach Montage ermöglicht wird.

Zur Kostenreduktion und einfachen Montage ist die Vorspannvorrichtung in Form Tellerfeder ausgebildet.

Weitere Vorteile und zweckmäßige Ausführungen der Erfindung sind der Beschreibung und den Zeichnungen zu entnehmen. Dabei zeigen:
- Fig. 1: eine schematische Darstellung einer Brennkraftmaschine mit einem Abgasturbolader dessen Abgasführungsabschnitt eine Leitvorrichtung zur Änderung einer Anströmung von Abgas auf ein im Abgasführungsabschnitt gelagertes Turbinenrad aufweist,
- Fig. 2: in einem Längsschnitt einen Abgasführungsabschnitt eines Abgasturboladers mit einer Leitvorrichtung gemäß dem Stand der Technik und
- Fig. 3: in einem Längsschnitt einen Ausschnitt des Abgasführungsabschnitts des erfindungsgemäßen Abgasturboladers.

In den Figuren sind alle gleichen oder gleich wirkenden Bauteile mit denselben Bezugszeichen versehen.

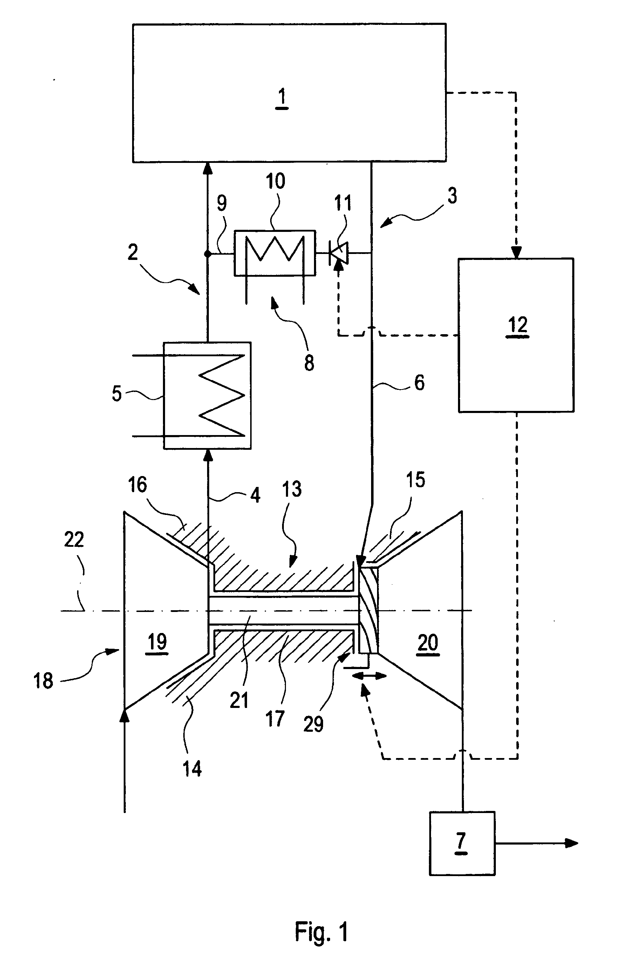

Die in Fig. 1 dargestellte Brennkraftmaschine 1, welche insbesondere als Hubkolben-Brennkraftmaschine ausgestaltet ist, und entsprechend einem Ottoverbrennungsverfahren oder einem Dieselverbrennungsverfahren betreibbar ist, weist einen Frischluftstrang 2, in welchem überwiegend Frischluft strömbar vorliegt, und einen Abgasstrang 3, in welchem überwiegend Abgas strömbar vorliegt, auf.

Der Frischluftstrang 2 weist eine Ladeluftleitung 4 auf, wobei stromauf der Brennkraftmaschine 1 ein Ladeluftkühler 5 zur Kühlung der angesaugten Verbrennungsluft positioniert ist. Ein nicht näher dargestellter Luftfilter zum Reinigen der angesaugten Verbrennungsluft ist an einem von der Brennkraftmaschine 1 abgewandt positionierten Ende der Ladeluftleitung 4 angeordnet.

Der Abgasstrang 3 umfasst eine Abgasleitung 6 und eine Abgasnachbehandlungseinheit 7, wobei die an einem von der Brennkraftmaschine 1 abgewandten Ende der Abgasleitung 6 zur Abgasnachbehandlung angeordnete Abgasnachbehandlungsenheit 7 insbesondere in Form eines Rußfilters und/oder Katalysators ausgebildet ist.

Die Brennkraftmaschine 1 weist ergänzend ein Abgasrückführsystem 8 auf, welches eine Abgasrückführleitung 9, einen Abgaskühler 10 sowie ein Abgasrückführventil 11 umfasst. Die Abgasrückführleitung 9 ist als durchströmbare Verbindungsleitung ausgeführt, wobei ein der Abgasleitung 6 zugewandt positioniertes Ende stromab der Brennkraftmaschine 1 und stromauf der Abgasnachbehandlungseinheit 7 mit der Abgasleitung 6 verbunden ist und ein der Ladeluftleitung 4 zugewandt positioniertes Ende der Abgasrückführleitung 9 mit der Ladeluftleitung 4 stromab des Ladeluftkühlers 5 und stromauf der Brennkraftmaschine 1 angeordnet ist. In der Abgasrückführleitung 9 ist zur Kühlung von rückgeführtem Abgas der Abgaskühler 10 angeordnet. Eine Einstellung einer rückgeführten Abgasmenge erfolgt mit Hilfe des Abgasrückführventils 11. Somit ist eine Strömung des Abgases entsprechend der Einstellung des Abgasrückführventils 11 aus der Abgasleitung 6 über die Abgasrückführleitung 9 in die Ladeluftleitung 4 realisierbar.

Zur Regelung und Steuerung vieler Funktionen ist der Brennkraftmaschine ein Regelungs- und Steuerungssystem 12 zugeordnet. Über das Regelungs- und Steuerungssystem 12 sind insbesondere die Kraftstoffzufuhr und das Abgasrückführventil 11 regelbar.

Der Brennkraftmaschine 1 ist ein Abgasturbolader 13 zugeordnet, welcher ein Gehäuse 14 aufweist, das einen durchströmbaren Abgasführungsabschnitt 15, einen durchströmbaren Luftführungsabschnitt 16 und einen Lagerabschnitt 17 umfasst, wobei der Luftführungsabschnitt 16 im Frischluftstrang 2 stromab des Ladeluftkühlers 5 und der Abgasführungsabschnitt 15 im Abgasstrang zwischen der Verbindungsstelle der Abgasrückführleitung 9 mit der Abgasleitung 6 und der Abgasnachbehandlungseinheit 7 angeordnet sind.

Der Abgasturbolader 13 weist ein Laufzeug 18 auf, welches ein Verdichterrad 19 zum Ansaugen und Verdichten von Verbrennungsluft, ein Turbinenrad 20 zur Expansion von Abgas sowie eine das Verdichterrad 19 mit dem Turbinenrad 20 drehfest verbindende Welle 21 mit einer Drehachse 22 umfasst. Die Welle 21 ist im Lagerabschnitt 17 des Abgasturboladers 13 drehbar gelagert, welcher zwischen dem Luftführungsabschnitt 16 und dem Abgasführungsabschnitt 15 positioniert ist.

Im Betrieb der Brennkraftmaschine 1 wird das Turbinenrad 20 als Folge einer Beaufschlagung durch das Abgas der Brennkraftmaschine 1 in eine Rotationsbewegung versetzt, wobei mit Hilfe der Welle 21 das Verdichterrad 19 ebenfalls in Rotation versetzt wird, so dass es Verbrennungsluft ansaugt und verdichtet.

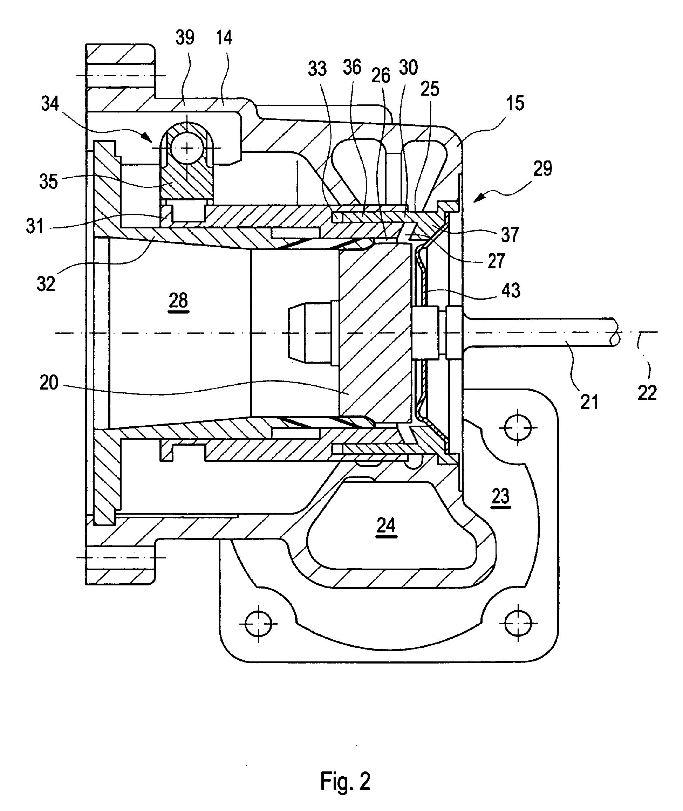

Zur Einströmung des Abgases in den Abgasführungsabschnitt 15 ist ein Eintrittskanal 23 im Abgasführungsabschnitt 15 ausgebildet, s. Fig. 2. Der Eintrittskanal 23 dient zur Konditionierung des Abgases, welches im Betrieb der Brennkraftmaschine 1 das Turbinenrad 20 in eine rotierende Bewegung versetzt. Vorzugsweise ist der Eintrittskanal 23 senkrecht zur Drehachse 22 angeordnet.

Stromab des Eintrittskanals 23 ist im Abgasführungsabschnitt 15 ein Spiralkanal 24 angeordnet, welcher zur Bereitstellung einer rotationssymmetrischen Strömung dient. Stromab des Spiralkanals 24 ist ein Zuströmkanal 25 im Abgasführungsabschnitt 15 positioniert, welcher zur Erzeugung eines Dralls der Strömung ausgebildet ist. Des Weiteren ist der Spiralkanal 24 als Verbindungskanal zwischen dem Eintrittskanal 23 und dem Zuströmkanal 25 ausgebildet.

Stromab des Zuströmkanals 25 ist eine Radkammer 26 im Abgasführungsabschnitt 15 angeordnet, welche das drehbare Turbinenrad 20 aufnehmbar ausgestaltet ist. Der Zuströmkanal 25 weist an seinem der Radkammer 26 zugewandt angeordneten Ende einen Mündungsquerschnitt 27 auf. Stromab der Radkammer 26 ist ein Austrittskanal 28 im Abgasführungsabschnitt 15 positioniert.

Damit sowohl bei niedrigen Lasten und niedrigen Drehzahlen der Brennkraftmaschine 1 als auch bei hohen Lasten und hohen Drehzahlen der Brennkraftmaschine 1 ein größtmöglicher Abgasturboladerwirkungsgrad erreichbar ist, ist das Abgas mit Hilfe einer verstellbar ausgebildeten Leitvorrichtung 29 konditionierbar, welche im Abgasführungsabschnitt 15 angeordnet ist.

Wie in der Fig. 2 dargestellt ist, umfasst die Leitvorrichtung 29 einen abschnittsweise durchströmbaren Leitgitterring 30, einen ringförmigen Axialschieber 31 und eine Konturhülse 32, welche der Führung des Axialschiebers 31 und zur Strömungskonditionierung des Abgases im Austrittskanal 28 dient. Der Leitgitterring 30, der Axialschieber 31, die Konturhülse 32 und die Welle 21 sind koaxial angeordnet. Die Konturhülse 32 ist unbewegbar im Abgasführungsabschnitt 15 positioniert.

Der Leitgitterring 30 ist das Turbinenrad 20 teilweise umschließend im Zuströmkanal 25 angeordnet, wobei der Leitgitterring 30 in den Mündungsquerschnitt 27 hineinragend ausgebildet ist. Der Axialschieber 31 weist eine dem Leitgitterring 30 zugewandt angeordnete Aussparung, eine Matrize 33 auf, in welche der Leitgitterring 30 an seinem der Matrize zugewandt angeordneten Ende einführbar ausgestaltet ist. Mit Hilfe des Axialschiebers 31 ist der Mündungsquerschnitt 27 in seiner Größe einstellbar. Bevorzugt ist der Mündungsquerschnitt 27 bei niedrigen Drehzahlen und hohen Lasten der Brennkraftmaschine 1 klein und bei hohen Lasten und/oder Drehzahlen der Brennkraftmaschine 1 groß ausgebildet.

Der Leitvorrichtung 29 ist eine Verstellvorrichtung 34 mit einem Verstellhebel 35 zugeordnet. Eine auf den Verstellhebel 35 wirkende, die Verschiebung einleitende Kraft ist elektrisch und/oder mechanisch und/oder pneumatisch und/oder hydraulisch initiierbar.

In der Fig. 2 ist der Abgasführungsabschnitt 15 gemäß dem Stand der Technik dargestellt. Der Leitgitterring 30 weist einen ersten, durchströmbaren Bereich 36 auf, welcher im Mündungsquerschnitt 27 positioniert ist und im Folgenden als Leitschaufeln 36 bezeichnet wird. Ein zweiter Bereich 37 des Leitgitterrings 30, im Folgenden als Träger 37 bezeichnet, ist undurchströmbar und dient der Positionierung der Leitschaufeln 36 sowie einer fixierten und bezogen auf die Drehachse 22 zentrischen Befestigung des Leitgitterrings 30 im Abgasführungsabschnitt 15.

Der Träger 37 ist in einem dem Lagerabschnitt 17 zugewandt positionierten Bereich sich am Abgasführungsabschnitt 15 abstützend und unbewegbar gelagert, wobei eine an einem der Leitschaufeln 36 abgewandt angeordneten Ende des Trägers 37 schalenförmige Vorrichtung 43 in Form eines Hitzeschildes angeordnet ist. Eine Fixierung des Trägers 37 erfolgt beispielsweise mit Hilfe des an den Abgasführungsabschnitt 15 angrenzenden Lagerabschnitts 17.

Eine Aufnahme der Leitschaufeln 36 vom Axialschieber 31 erfolgt ausgehend von einem dem Träger 37 abgewandt angeordneten Ende der Leitschaufeln 36.

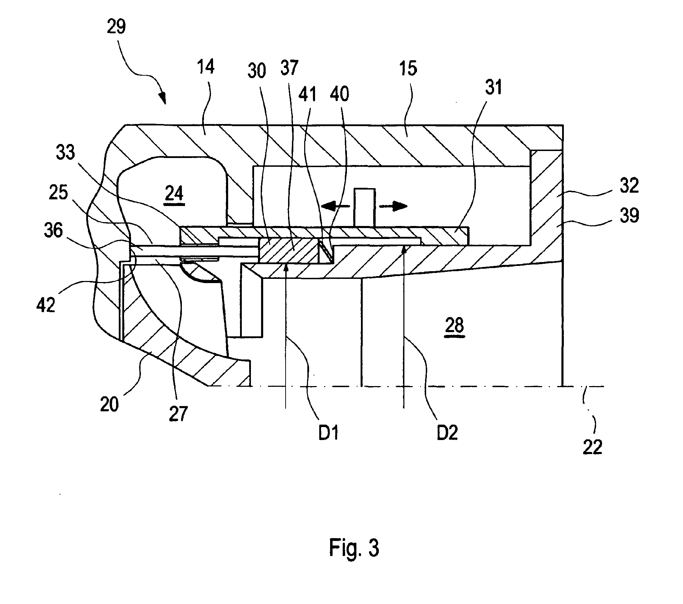

In Fig. 3 ist der Leitgitterring 30 des erfindungsgemäßen Abgasturboladers 13 dargestellt, wobei der Träger 37 des Leitgitterrings 30 zentrisch zur Drehachse 22 auf der Konturhülse 32 angeordnet ist. Die Konturhülse 32 weist zur Aufnahme des Trägers 37 an ihrem dem Träger 37 zugewandt angeordneten Ende einen über ihren gesamten Umfang vorgesehenen Absatz 40 auf. Somit weist die Konturhülse einen ersten äußeren Durchmesser D1 und einen zweiten äußeren Durchmesser D2 auf, wobei der erste äußere Durchmesser D1 kleiner ausgebildet ist als der zweite äußere Durchmesser D2. Der Träger 37 ist im Bereich des kleineren Durchmessers D1 die Konturhülse 32 vollständig umfassend ausgestaltet.

Zur Herbeiführung einer unbewegbaren Verbindung zwischen dem Träger 37 und der Konturhülse 32 beziehungsweise zur Zentrierung beziehungsweise Fixierung des Leitgitterrings 30, kann die Verbindung beispielsweise in Form einer Presspassung ausgebildet sein. Auch ist die Zentrierung und Fixierung des Trägers 37 mit Hilfe eines oder mehrerer Befestigungselemente beispielsweise in Form eines Stiftes mit der Konturhülse 32 herbeiführbar.

Der Träger 37 ist dabei so auf der Konturhülse 32 positioniert, dass ein Bewegungsspalt zwischen der Matrize 33 und den Leitschaufeln 36 vorliegt, so dass bei einer Bewegung des Axialschiebers 31 eine Berührung zwischen dem Axialschieber 31 und den Leitschaufeln 36 vermeidbar ist.

In diesem Ausführungsbeispiel ist zur Vermeidung eines Strömungsverluste herbeiführenden Spalts zwischen einem einer Gehäusewandung 42 und einem dieser Gehäusewandung 42 zugewandt angeordneten Ende der Leitschaufeln 36 eine Vorspannvorrichtung 41 vorgesehen, mit deren Hilfe der Spalt nahezu oder vollständig vermeidbar ist. Die Vorspannvorrichtung 41 ist zwischen einem der Konturhülse 32 zugewandt angeordneten Ende des Trägers 37 und dem Absatz 40 der Konturhülse 32 angeordnet.

Die Vorspannvorrichtung 41 ist in Form einer Tellerfeder ausgebildet. Die Vorspannvorrichtung 41 kann auch in Form einer entsprechend gestalteten Spiral- oder Schraubenfeder ausgebildet sein.

## Patentansprüche

1. Abgasturbolader für eine Brennkraftmaschine, mit einem Gehäuse (14) und einem Laufzeug (18),wobei das Gehäuse (14) einen durchströmbaren Abgasführungsabschnitt (15) und das Laufzeug (18) ein Turbinenrad (20) und eine mit dem Turbinenrad (20) drehfest verbundene Welle (21) aufweist, wobei das Turbinenrad (20) im Abgasführungsabschnitt (15) drehbar gelagert ist, und das Turbinenrad (20) von Abgas beaufschlagbar ausgestaltet ist, und im Abgasführungsabschnitt (15) eine Leitvorrichtung (29) zur Änderung der Beaufschlagung des Turbinenrades (20) durch das Abgas angeordnet ist, wobei die Leitvorrichtung (29) einen durchströmbaren Leitgitterring (30) und einen Axialschieber (31) umfasst, und der Leitgitterring (30) einen Träger (37) zur fixierten Lagerung sowie Leitschaufeln (36) aufweist, und der Axialschieber (31) die Leitschaufeln (36) aufnehmend ausgestaltet ist, wobei
**dadurch gekennzeichnet, dass**
der Leitgitterring (30) so positioniert ist, dass die Leitschaufeln (36) ausgehend vom Träger (37) vom Axialschieber (31) aufnehmbar sind, **wobei der Axialschieber (31) auf einer koaxial mit der Welle (21) im Abgasführungsabschnitt (15) unbewegbar angeordneten Konturhülse (32) axial bewegbar angeordnet ist.**

2. Abgasturbolader nach Anspruch 1,
**dadurch gekennzeichnet, dass**
der Träger (37) zentrisch zur Drehachse (22) auf **der** Konturhülse (32) der Leitvorrichtung (29) gelagert ist.

3. Abgasturbolader nach Anspruch 1 oder 2,
**dadurch gekennzeichnet, dass**
die Konturhülse (**32**) als Zentriervorrichtung (39) ausgestaltet ist.

4. Abgasturbolader nach Anspruch 1 oder 2,
**dadurch gekennzeichnet, dass**
zur Zentrierung eine Zentriervorrichtung (39) zwischen dem Leitgitterring (30) und **der** Konturhülse (32) angeordnet ist und/oder dass die Zentrierung mit Hilfe einer reib- und/oder formschlüssigen Verbindung herbeiführbar ist.

5. Abgasturbolader nach Anspruch 3 oder 4,
**dadurch gekennzeichnet, dass**
die Zentriervorrichtung (39) starr ausgebildet ist.

6. Abgasturbolader nach einem der Ansprüche 1 bis 5,
**dadurch gekennzeichnet, dass**
der Leitgitterring (30) eine Vorspannvorrichtung (41) aufweist.

7. Abgasturbolader nach Anspruch 6,
**dadurch gekennzeichnet, dass**
die Vorspannvorrichtung (41) an einem der Konturhülse (17) zugewandt angeordneten Ende des Leitgitterrings (15) positioniert ist.

8. Abgasturbolader nach Anspruch 6 oder 7,
**dadurch gekennzeichnet, dass**
die Vorspannvorrichtung (41) in Form einer Tellerfeder ausgebildet ist.

## Claims

1. Turbocharger for an internal combustion engine, comprising a housing (14) and a wheel assembly (18), wherein the housing (14) comprises a flow-through exhaust gas duct section (15) and the wheel assembly (18) comprises a turbine wheel (20) and a shaft (21) non-rotatably joined thereto, wherein the turbine wheel (20) is rotatably mounted in the exhaust gas duct section (15) and exhaust gas can be applied to the turbine wheel (20), and a guide device (29) for changing the application of exhaust gas to the turbine wheel (20) is provided in the exhaust gas duct section (15), wherein the guide device (29) comprises a flow-through guide grid ring (30) and an axial slide (31) and the guide grid ring (30) is provided with a support (37) for fixed mounting and the axial slide (31) is designed for accommodating guide vanes (36),
**characterised in that**
the guide grid ring (30) is positioned such that the guide vanes (36), starting from the support (37), can be accommodated by the axial slide (31), wherein the axial slide (31) is mounted for axial movement on a contoured sleeve (32) immovably located in the exhaust gas duct section (15) coaxially with the shaft (21).

2. Turbocharger according to claim 1,
**characterised in that**
the support (37) is bearing-mounted centrally in respect to the axis of rotation (22) on the contoured sleeve (32) of the guide device (20).

3. Turbocharger according to claim 1 or 2,
**characterised in that**
the contoured sleeve (32) is designed as a centring device (39).

4. Turbocharger according to claim 1 or 2,
**characterised in that**
for centring, a centring device (39) is placed between the guide grid ring (30) and the contoured sleeve (32), and/or **in that** the centring can be established using a friction- and/or positive-locking connection.

5. Turbocharger according to claim 3 or 4,
**characterised in that**
the centring device (39) is designed to be rigid.

6. Turbocharger according to any of claims 1 to 5,
**characterised in that**
the guide grid ring (30) comprises a preloading device (41).

7. Turbocharger according to claim 6,
**characterised in that**
the preloading device (41) is positioned at an end of the guide grid ring (30) which faces the contoured sleeve (32).

8. Turbocharger according to claim 6 or 7,
**characterised in that**
the preloading device (41) is designed in the shape of a Belleville spring.

## Revendications

1. Turbocompresseur pour un moteur à combustion interne, comportant un carter (14) et un ensemble tournant (18), le carter (14) comprenant une partie de conduite de gaz échappement (15) pouvant être traversée et l'ensemble tournant (18) comprenant une roue de turbine (20) et un arbre (21) solidaire en rotation avec la roue de la turbine (20), la roue de la turbine (20) étant montée en rotation dans la partie de conduite de gaz d'échappement (15), et la roue de turbine (20) étant conçue pour être alimentée en gaz d'échappement, et dans la partie de conduite de gaz d'échappement (15) est disposé un dispositif de guidage (29) destiné à modifier l'alimentation de la roue de turbine (20) par le gaz d'échappement, le dispositif de guidage (29) comprenant une grille annulaire de guidage (30) pouvant être traversée et un coulisseau axial (31), et la grille annulaire de guidage (30) présentant un support (37) pour le logement fixe ainsi que des aubes directrices (36) et le coulisseau axial (31) étant conçu pour recevoir les aubes directrices (36), **caractérisé en ce que** la grille annulaire de guidage (30) est positionnée de telle sorte que les aubes directrices (36) puissent être logées à partir du support (37) par le coulisseau axial (31), le coulisseau axial (31) pouvant se déplacer axialement sur un manchon de contour immobile dans la partie de conduite de gaz d'échappement avec l'arbre (21).

2. Turbocompresseur selon la revendication 1, **caractérisé en ce que** le support (37) est monté de manière centrée par rapport à l'axe de rotation (22) sur le manchon de contour (32) du dispositif de guidage (29).

3. Turbocompresseur selon la revendication 1 ou la revendication 2, **caractérisé en ce que** le manchon de contour (32) est conçu comme un dispositif de centrage (39).

4. Turbocompresseur selon la revendication 1 ou la revendication 2, **caractérisé en ce qu'**un dispositif de centrage (29) destiné à centrer est disposé entre la grille annulaire de guidage (30) et le manchon de contour (32) et/ou **en ce que** le centrage peut être réalisé à l'aide d'une liaison de friction et/ou par complémentarité de forme.

5. Turbocompresseur selon la revendication 3 ou la revendication 4, **caractérisé en ce que** le dispositif de centrage (39) est conçu de manière fixe.

6. Turbocompresseur selon l'une quelconque des revendications 1 à 5, **caractérisé en ce que** la grille annulaire de guidage (30) présente un dispositif de précontrainte (41).

7. Turbocompresseur selon la revendication 6, **caractérisé en ce que** le dispositif de précontrainte (41) est positionné sur une extrémité de la grille annulaire de guidage (15) orientée vers le manchon de contour (15)

8. Turbocompresseur selon la revendication 6 ou la revendication 7, **caractérisé en ce que** le dispositif de précontrainte (41) est conçu en forme d'une rondelle conique.
